# EUROPÄISCHE PATENTSCHRIFT

(11) **EP 1 702 796 B1**
(45) Veröffentlichungstag und Bekanntmachung des Hinweises auf die Patenterteilung: **11.04.2007**
(21) Anmeldenummer: 06005357.6
(22) Anmeldetag: 16.03.2006
(51) Int. Cl.: B60Q 1/14

(54) **Kombinierter Druck- und Drehschalter für ein Kraftfahrzeug**
Combined push button and rotary switch for a vehicle
Bouton poussoir et commutateur rotatif combinés pour un véhicule

(30) Priorität: 18.03.2005 DE 102005012579
(43) Veröffentlichungstag der Anmeldung: 20.09.2006
(73) Patentinhaber: Leopold Kostal GmbH & Co. KG, 58507 Lüdenscheid (DE)
(72) Erfinder: Lacroix, Jeremy, 58509 Lüdenscheid (DE); Heinze, Ralf, 58513 Lüdenscheid (DE)

(56) Entgegenhaltungen:
- EP-A- 1 407 930
- US-A- 5 736 700
- US-A- 5 939 686
- US-A- 6 091 033
- US-A1- 2002 153 233

## Beschreibung

Die vorliegende Erfindung betrifft einen kombinierten Druck- und Drehschalter für ein Kraftfahrzeug, mit einem Betätigungsglied zum Auslösen von Schaltfunktionen und mit einem linear verschieblich angeordneten Kontaktteil, welches mehrere Kontaktfedern aufweist, welche Schaltkontaktbahnen kontaktieren, und mit einem Funktionselement, welches eine schraubenlinienförmig ausgebildete Steuerbahn aufweist, und mittels eines entlang der Steuerbahn geführten Zapfens eine Drehbewegung des Betätigungsglieds in eine lineare Bewegung des Kontaktteils umsetzt.

US 5 939 686 offenbart einen kombinierten Druck- und Drehschalter nach dem Oberbegriff von Anspruch 1.

Aus der DE 197 22 780 C1 ist eine elektrische Drehschaltereinheit, insbesondere für Lenkstockschalter bekannt, die sogar mehrere Betätigungsglieder für Drehschaltfunktionen aber keine durch ein Betätigungsglied ausgelöste Druckschaltfunktion aufweist. Selbstverständlich ist es bekannt, eine Druckschaltfunktion durch einen Lenkstockschalter auszulösen, beispielsweise die Lichthupenfunktion, wobei diese bisher fast ausschließlich durch eine Bewegung des gesamten Schalthebels um seinen Anlenkungspunkt ausgelöst wird.

Die Aufgabenstellung der Erfindung bestand darin, einen einfach und kostengünstig aufgebauten kombinierten Druck- und Drehschalter für ein Kraftfahrzeug zu schaffen. Insbesondere sollte ein bekannter Aufbau eines Lenkstockdrehschalters derart weiterentwickelt werden, daß mit möglichst geringem Aufwand auch eine Druckschalt- oder Drucktastfunktion realisiert werden kann.

Diese Aufgabe wird erfindungsgemäß dadurch gelöst, daß das Betätigungsglied neben einem Drehelement eine Drucktastenkappe umfaßt und daß eine Bewegung der Drucktastenkappe über ein auf den Zapfen wirkendes Verbindungselement eine lineare Bewegung des Kontaktteils bewirkt.

Hierdurch wird auf einfache Weise erreicht, daß sowohl eine rotatorische als auch eine translatorische Bewegung des Betätigungsgliedes in eine lineare Bewegung des Funktionselements und damit auch in eine lineare Bewegung des Kontaktteils umgesetzt wird. Damit wird bei beiden Betätigungsarten des Betätigungsglieds jeweils eine spezifische Schaltfunktion ausgelöst. Da sowohl für die Erfassung der Drehschalt- wie auch der Druckschaltfunktion das gleiche Kontaktteil verwendet wird, ist der erforderliche zusätzliche Aufwand gegenüber dem Aufbau eines einfachen Dreh- oder Druckschalters gering.

Vorteilhafte Ausgestaltungen und Weiterbildungen der Erfindung gehen aus den Unteransprüchen hervor.

So ist es vorteilhaft, wenn die Schaltkontaktflächen zumindest teilweise eindeutig der Drehschaltfunktion bzw. der Druckschaltfunktion zugeordnet sind. So kann die Drehschalt- und die Druckschaltfunktion auf einfache Weise mit eindeutig zugeordneten Schaltfunktionen belegt sein.

Darüber hinaus ist es vorteilhaft, wenn die am Kontaktteil angeordneten Kontaktfedern zumindest teilweise eindeutig der Drehschaltfunktion bzw. der Druckschaltfunktion zugeordnet sind. Dadurch können durch die Drehschalt-und die Druckschaltfunktion als unabhängige Schaltfunktionen realisiert werden.

Diesbezüglich ist es überdies vorteilhaft, den erfindungsgemäßen Schalter so auszubilden, daß die Verschiebung des Kontaktteils durch die Betätigung der Drucktastenkappe der Verschiebung des Kontaktteils durch die Betätigung des Drehelements überlagert ist.

Ein besonders einfacher Aufbau der Betätigungsmechanik kann erreicht werden, wenn die Drucktastenkappe und das Verbindungselement einstückig miteinander ausgebildet sind. Darüber hinaus können auch das Drehelement und die Drucktastenkappe einstückig miteinander ausgebildet sein, so daß sie für beide Betätigungsarten ein gemeinsames Betätigungsglied bilden.

Des weiteren kann der mit der Steuerbahn des Funktionselements verbundenen Zapfen einstückig mit dem Verbindungselement ausgebildet sein.

Der Druckschalter kann je nach vorgesehener Anwendung des gesamten Kombinationsschalters sowohl einen, hinsichtlich der Betätigungsstellungen monostabilen, Drucktaster ausbilden oder auch einen Druckschalter mit zwei stabilen Schaltstellungen. Letzterer kann beispielsweise dadurch realisiert werden, daß die Drucktastenkappe in bekannter Weise entlang einer herzförmigen Rastkurve geführt wird.

Eine bevorzugte Anwendung des erfindungsgemäßen Druck- und Drehschalters ist die Ausbildung eines Schaltelements an einem Lenkstockschalters eines Kraftfahrzeugs.
Ein Ausführungsbeispiel der Erfindung ist in der Zeichnung dargestellt und wird im folgenden anhand der Zeichnung näher erläutert.
Es zeigen
- Figur 1: eine Schnittzeichnung durch einen kombinierten Druck- und Drehschalter,
- Figur 2: einen montierten Schalter,
- Figur 3: das Kontaktelement auf einem Schaltkontaktträger,
- Figur 4: den Schaltkontaktträger in einer Einzeldarstellung.

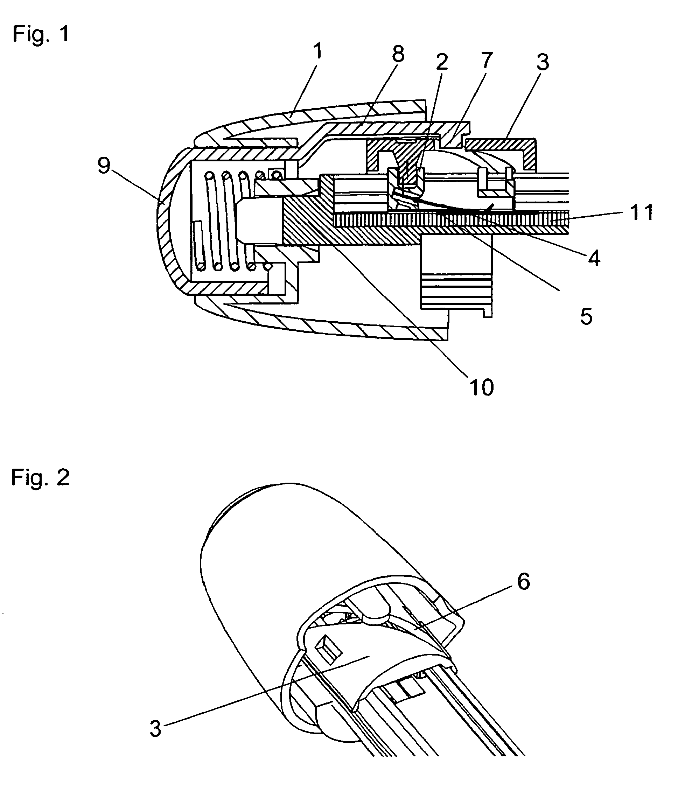

Die Figur 1 zeigt einen Schnitt durch einen erfindungsgemäß aufgebauten Druck- und Drehschalter. Der dargestellte Schalter ist vorzugsweise an einem freien Endabschnitt eines Lenkstockschalters angeordnet und dient beispielsweise zur Steuerung einer Scheibenwaschanlage, wobei die Druckschaltfunktion zur Einleitung des Wisch-Wasch-Vorgangs vorgesehen sein kann.

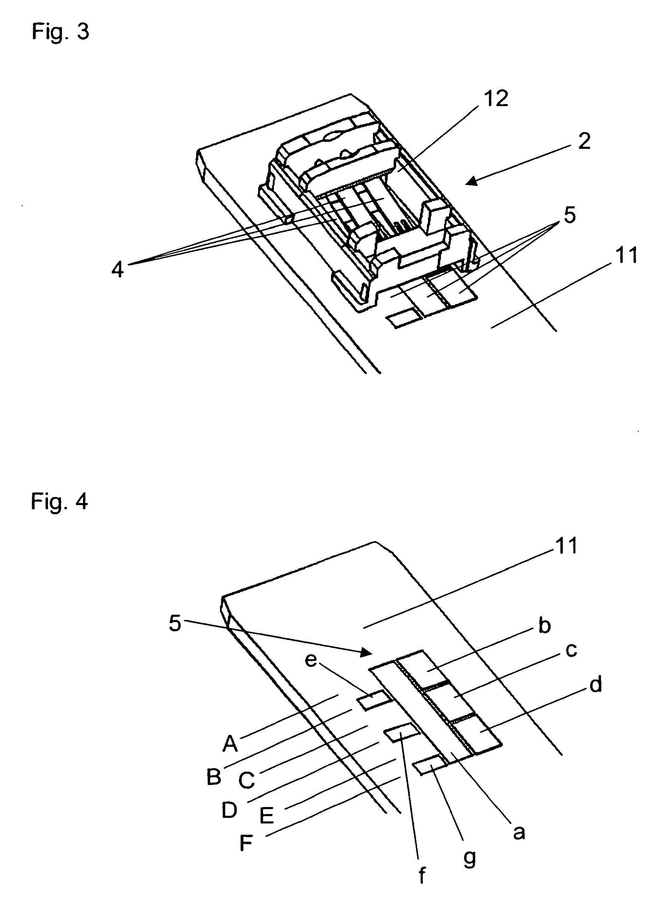

An einer Schalterkulisse (10) ist ein Schaltkontaktträger (11) angeordnet, welcher mehrere feststehende Schaltkontakte in Form von Schaltkontaktbahnen (5) trägt. Als bewegliches elektrisches Teil des Schalters dient ein linear in Richtung der Schalterlängsachse verschieblich angeordnetes Kontaktteil (2). Wie die Figur 3 besonders deutlich zeigt, besteht das Kontaktteil (2) aus einem Rahmen (12), welcher aus einem isolierenden Material gefertigt ist und aus mehreren an dem Rahmen (12) befestigten Kontaktfedern (4). Die Kontaktfedern (4) haben die Funktion, je nach Stellung des Kontaktteils (2) relativ zum Schaltkontaktträger (11), die Verbindung zwischen verschiedenen Schaltkontaktbahnen (5) herzustellen oder zu trennen.

Mit der Schalterkulisse (10) drehbar verbunden ist ein um die Schalterkulisse (10) herum angeordnetes hülsenförmiges Drehelement (1). An einem Endschnitt trägt die Schalterkulisse (10) überdies eine mit einer Druckfeder (13) belastete Drucktastenkappe (9). Einstückig an die Drucktastenkappe (9) angeformt ist ein streifenförmiges Verbindungselement (8), welches an seinem der Drucktastenkappe (9) gegenüberliegenden Endabschnitt einen einstückig angeformten Zapfen (7) trägt.

Dieser Zapfen (7) greift in eine schraubenlinienförmige Ausnehmung, die im folgenden kurz als Steuerbahn (6) bezeichnet wird und besonders deutlich in der Figur 2 erkennbar ist, in einem Funktionselement (3), welches etwa die Form eines Zylindermantelabschnitts aufweist und mit dem beweglichen Kontaktteil (2) in Verbindung steht und mit diesem zusammen verschieblich angeordnet ist.

Eine Verschiebung des Funktionselements (3) wird somit durch den in die Steuerbahn (6) eingreifenden Zapfen (7) bewirkt. Dies kann auf zwei verschiedene Weisen geschehen. Wird die Drucktaste betätigt, so verschiebt sich die Drucktastenkappe (9) sowie das Verbindungselement (8) und damit auch der am Verbindungselement (8) angeformte Zapfen (7) in Richtung der Schalterlängsachse. Wie aus den Figuren 1 und 2 hervorgeht, drückt hierbei der Zapfen (7) gegen den Rand der Steuerbahn (6), wodurch das Funktionselement (3) bei der Verschiebung der Drucktastenkappe (9) mitgeführt wird. Entsprechend wird das mit dem Funktionselement (3) verbundene Kontaktteil (2) mitbewegt und löst eine der neu eingenommenen Position entsprechende Schaltfunktion aus.

Die zweite Möglichkeit zur Verschiebung des Funktionselements (3) besteht in einer Verdrehung des Drehelementes (1) um die Schalterlängsachse. Das Drehelement (1) kann hierzu entweder einstückig mit der Drucktastenkappe (9) und dem Verbindungselement (8) verbunden sein oder, in dem Fall, daß es ein separates Bauteil ausbildet, die Drucktastenkappe (9) über ein in der Zeichnung nicht dargestelltes Mitnehmerelement mitdrehen.

In jedem Fall wird bei einer so bewirkten Drehung der Drucktastenkappe (9) und des Verbindungselements (8) auch der Zapfen (7) entlang der Steuerbahn (6) weitergeführt, wodurch das Funktionselement (3) ebenfalls linear verschoben wird und das Kontaktteil (2) von einer Schaltstellung in eine andere Schaltstellung bringt.

Durch eine geeignete Ausgestaltung des Kontaktteils (2) und der Schaltkontaktbahnen (5) können die beiden unterschiedlichen Arten der Schalterbetätigung unterschieden und unabhängig voneinander ausgewertet werden. Dies soll anhand der Figur 4 erläutert werden.

Die Figur 4 zeigt einen Schaltkontaktträger (11), der drei Schaltkontaktbahnen (5) trägt. Der Schaltkontaktträger (11) besteht aus einem isolierenden Material, beispielweise einer Keramik oder einem Leiterplattenmaterial, während die Schaltkontaktbahnen (5) aus einen gut leitfähigen und mechanisch möglichst verschleißarmen Werkstoff gefertigt sind. Bevorzugt verwendet werden hierbei Metallbahnen mit einer Edelmetallbeschichtung oder für besonders kostengünstige Ausführungen auch Kohlenstoffbahnen. Jeder Schaltkontaktbahn (5) ist, wie die Figur 3 zeigt, eine Kontaktfeder (4) zugeordnet; alle drei Kontaktfedern (4) sind elektrisch miteinander verbunden.

Wie aus der Figur 4 weiter hervorgeht, bildet die mittlere Schaltkontaktbahn (5) eine durchgehende Schaltkontaktfläche (a) aus, während die beiden äußeren Schaltkontaktbahnen (5) jeweils zusätzlich in drei einzelne Schaltkontaktflächen (b, c, d bzw. e, f, g) unterteilt sind. Hierbei sind die Schaltkontaktflächen b, c, und d der Drehschaltfunktion zugeordnet, während die Schaltkontaktflächen e, f und g zu Auswertung der Drucktastenbetätigung vorgesehen sind.

Eine Schaltfunktion wird jeweils dann ausgelöst, wenn eine Kontaktfeder (4) eine der äußeren Schaltkontaktflächen (b, c, d , e, f , g) mit der inneren Schaltkontaktfläche a verbindet. Hierbei sind sechs verschiedene Schaltpositionen (A, B, C, D , E, F) des Kontaktteils (2) auf dem Schaltkontaktträger (11) möglich, wodurch entsprechend sechs verschiedene Schaltzustände realisierbar sind.

Die drei Schaltkontaktflächen (b, c, d) für die Drehschaltfunktion decken jeweils zwei (A, B, bzw. C, D, bzw. E, F) der sechs Schaltpositionen (A, B, C, D, E, F) ab. Allerdings bewirkt eine Betätigung des Drehelements (1) auch eine Verschiebung des Kontaktteil (2) um jeweils zwei Schaltpositionen; dadurch gelangt das Kontaktteil jeweils von einer der Drehschaltfunktion zugeordneten Schaltkontaktfläche (b, c, d) zu einer entsprechenden benachbarten Schaltkontaktfläche.

Eine Betätigung der Drucktaste verschiebt das Kontaktteil (2) um jeweils eine Schaltposition und zwar relativ zu der momentan durch die Drehschaltfunktion eingestellten Schaltposition. Befinden sich die Kontaktfedern (4) beispielsweise in der Schaltposition C, was der mittleren von den drei Drehschaltstellungen entspricht, so bewirkt eine Betätigung der Drucktaste eine Verschiebung des Kontaktteils (2) in die Schaltposition D. Da die Schaltkontaktfläche c der Drehschaltfunktion sowohl die Schaltposition C als auch D abdeckt, ändert sich hierbei die momentan durch den Drehschalter eingestellt Funktion nicht. Da aber durch die Drucktastenbetätigung die Kontaktfedern (4) die Schaltkontaktflächen a und f verbinden, kann eine zusätzliche elektrische Funktion durch die Drucktastenbetätigung gesteuert werden. Entsprechendes gilt für die Drehschaltpositionen A und E.
Es wird somit möglich, mit nur einem Kontaktteil einen Schalter mit unabhängig voneinander wirkenden Drehschalt- und Druckschaltfunktionen aufzubauen, der aus nur wenigen Einzelteilen besteht. Dabei können die Schaltfunktionen durch eine entsprechende Ausführung der Kontakteile und der Schaltkontaktflächen auf dem Schaltkontaktträger leicht an spezifische Anwendungserfordernisse angepaßt werden.

### Bezugszeichen

- 1: Drehelement
- 2: Kontaktteil
- 3: Funktionselement
- 4: Kontaktfedern
- 5: Kontaktbahnen
- 6: Steuerbahn
- 7: Zapfen
- 8: Verbindungselement
- 9: Drucktastenkappe
- 10: Schalterkulisse
- 11: Schaltkontaktträger
- 12: Rahmen

- a, b, c, d, e, f, g: Schaltkontaktflächen
- A, B, C, D, E, F: Schaltpositionen

## Patentansprüche

1. Kombinierter Druck- und Drehschalter für ein Kraftfahrzeug, mit einem Betätigungsglied zum Auslösen von Schaltfunktionen und mit einem linear verschieblich angeordneten Kontaktteil (2), welches mehrere Kontaktfedern (4) aufweist, welche Schaltkontaktbahnen (5) kontaktieren, und mit einem Funktionselement (3), welches eine schraubenlinienförmig ausgebildete Steuerbahn (6) aufweist, und mittels eines entlang der Steuerbahn (6) geführten Zapfens (7) eine Drehbewegung des Betätigungsglieds in eine lineare Bewegung des Kontaktteils (2) umsetzt, wobei das Betätigungsglied neben einem Drehelement (1) eine Drucktastenkappe (9) umfaßt,
**dadurch gekennzeichnet,**
**daß** eine Bewegung der Drucktastenkappe (9) über ein auf den Zapfen (7) wirkendes Verbindungselement (8) eine lineare Bewegung des Kontaktteils (2) bewirkt.

2. Kombinierter Druck- und Drehschalter nach Anspruch 1, **dadurch gekennzeichnet, daß** die Drucktastenkappe (9) und das Verbindungselement (8) einstückig miteinander ausgebildet sind.

3. Kombinierter Druck- und Drehschalter nach Anspruch 1 oder 2, **dadurch gekennzeichnet, daß** die Drucktastenkappe (9) und das Drehelement (1) einstückig miteinander ausgebildet sind.

4. Kombinierter Druck- und Drehschalter nach Anspruch 1, **dadurch gekennzeichnet, daß** der Zapfen (7) einstückig an das Verbindungselement (8) angeformt ist.

5. Kombinierter Druck- und Drehschalter nach Anspruch 1, **dadurch gekennzeichnet, daß** die Schaltkontaktbahnen (5) zumindest teilweise eindeutig der Drehschaltfunktion bzw. der Druckschaltfunktion zugeordnet sind.

6. Kombinierter Druck- und Drehschalter nach Anspruch 1, **dadurch gekennzeichnet, daß** die am Kontaktteil (2) angeordneten Kontaktfedern (4) zumindest teilweise eindeutig der Drehschaltfunktion bzw. der Druckschaltfunktion zugeordnet sind.

7. Kombinierter Druck- und Drehschalter nach Anspruch 1, **dadurch gekennzeichnet, daß** die Verschiebung des Kontaktteils (2) durch die Bewegung der Drucktastenkappe (9) der durch das Drehelement (1) bewirkten Positionierung des Kontaktteils (2) überlagert ist.

8. Kombinierter Druck- und Drehschalter nach Anspruch 1, **dadurch gekennzeichnet, daß** der Druckschalter als monostabiler Taster ausgeführt ist.

9. Kombinierter Druck- und Drehschalter nach Anspruch 1, **dadurch gekennzeichnet, daß** der Druckschalter als bistabiler Schalter ausgeführt ist.

10. Kombinierter Druck- und Drehschalter nach Anspruch 1, **dadurch gekennzeichnet, daß** der kombinierte Druck- und Drehschalter Bestandteil eines Lenkstockschalters für ein Kraftfahrzeug ist.

## Claims

1. Combined pushbutton and rotary switch for a motor vehicle with an actuating member for triggering switching functions, and with a contact constituent (2) which is arranged in a linearly displaceable manner and which features several contact springs (4) that contact switch contact decks (5), and with a function element (3) that features a control path (6) of a helical design and converts a rotary movement of the actuating member into a linear movement of the contact constituent (2) by means of a stud (7) guided along the control path (6), for which purpose the actuating member comprises a pushbutton knob (9) in addition to a rotary element (1), **characterised by** the fact that a movement of the pushbutton knob (9) causes a linear movement of the contact constituent (2) by way of an interconnecting element (8) acting on the stud (7).

2. Combined pushbutton and rotary switch in accordance with Claim 1, **characterised by** the fact that the pushbutton knob (9) and the interconnecting element (8) are formed together in one piece.

3. Combined pushbutton and rotary switch in accordance with Claim 1 or Claim 2, **characterised by** the fact that the pushbutton knob (9) and the rotary element (1) are formed together in one piece.

4. Combined pushbutton and rotary switch in accordance with Claim 1, **characterised by** the fact that the stud (7) is integrally moulded onto the interconnecting element (8).

5. Combined pushbutton and rotary switch in accordance with Claim 1, **characterised by** the fact that the switch contact decks (5) are, at least partially, uniquely allocated to the rotary switching function or the pushbutton switching function, respectively.

6. Combined pushbutton and rotary switch in accordance with Claim 1, **characterised by** the fact that the contact springs (4) arranged on the contact constituent (2) are, at least partially, uniquely allocated to the rotary switching function or to the pushbutton switching function, respectively.

7. Combined pushbutton and rotary switch in accordance with Claim 1, **characterised by** the fact that the displacement of the contact constituent (2) by the movement of the pushbutton knob (9) overrides the positioning of the contact constituent (2) brought about by the rotary element (1).

8. Combined pushbutton and rotary switch in accordance with Claim 1, **characterised by** the fact that the pushbutton switch is designed as a monostable momentary-contact switch.

9. Combined pushbutton and rotary switch in accordance with Claim 1, **characterised by** the fact that the pushbutton switch is designed as a bistable switch.

10. Combined pushbutton and rotary switch in accordance with Claim 1, **characterised by** the fact that the combined pushbutton and rotary switch is a constituent of a steering column switch for a motor vehicle.

## Revendications

1. Commutateur combiné à poussoir et rotatif pour véhicule automobile, avec un organe d'actionnement pour le déclenchement de fonctions de commutation, et avec une pièce de contact linéairement mobile, qui présente plusieurs ressorts de contact (4) qui entrent en contact avec des voies de contact de commutation (5), et avec un élément fonctionnel (3) qui présente une piste de commande hélicoïdale (6) et transforme un mouvement de rotation de l'organe d'actionnement en un mouvement linéaire de la pièce de contact (2) au moyen d'une broche (7) guidée le long de la piste de commande (6), l'organe d'actionnement comprenant, à côté de l'élément rotatif (1), un bouton-poussoir (9), **caractérisé en ce que**, un mouvement du bouton-poussoir (9) provoque un mouvement linéaire de la pièce de contact (2), par l'intermédiaire d'un élément de liaison (8) qui agit sur la broche (7).

2. Commutateur combiné à poussoir et rotatif selon la revendication 1, **caractérisé en ce que** le bouton-poussoir (9) et l'élément de liaison (8) sont réalisés ensemble d'une seule pièce.

3. Commutateur combiné à poussoir et rotatif selon revendication 1 ou 2, **caractérisé en ce que** le bouton-poussoir (9) et l'élément rotatif (1) sont réalisés ensemble d'une seule pièce.

4. Commutateur combiné à poussoir et rotatif selon la revendication 1, **caractérisé en ce que** la broche (7) est formée d'une pièce sur l'élément de liaison (8).

5. Commutateur combiné à poussoir et rotatif selon la revendication 1, **caractérisé en ce que** les voies de contact de commutation (5) sont, au moins partiellement, associées de manière univoque à la fonction de commutation rotative, respectivement de la fonction de commutation par poussoir.

6. Commutateur combiné à poussoir et rotatif selon la revendication 1, **caractérisé en ce que** les ressorts de contact (4), agencés sur la pièce de contact (2), sont associés, au moins partiellement, de manière univoque, à la fonction de commutation rotative, respectivement à la fonction de commutation par poussoir.

7. Commutateur combiné à poussoir et rotatif selon la revendication 1, **caractérisé en ce que** le déplacement de la pièce de contact (2) par le mouvement du bouton-poussoir (9) est superposé au positionnement de la pièce de contact (2) réalisé par l'élément rotatif (1).

8. Commutateur combiné à poussoir et rotatif selon la revendication 1, **caractérisé en ce que** le commutateur à poussoir est réalisé en tant que bouton-poussoir monostable.

9. Commutateur combiné à poussoir et rotatif selon la revendication 1, **caractérisé en ce que** le commutateur à poussoir est réalisé en tant que commutateur bistable.

10. Commutateur combiné à poussoir et rotatif selon la revendication 1, **caractérisé en ce que** le commutateur combiné à poussoir et rotatif est partie constituante d'un commutateur fixé à la colonne de direction d'un véhicule automobile.
